(19) Europäisches Patentamt
European Patent Office
Office européen des brevets

(11) EP 4 567 510 A1

(12) EUROPEAN PATENT APPLICATION

(43) Date of publication:
11.06.2025 Bulletin 2025/24

(21) Application number: 23214793.4

(22) Date of filing: 07.12.2023

(51) International Patent Classification (IPC):
G02F 1/35 (2006.01)     G02F 1/365 (2006.01)

(52) Cooperative Patent Classification (CPC):
G02F 1/365; G02F 1/35; G02F 1/3528;
G02F 2201/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: ASML Netherlands B.V.
5500 AH Veldhoven (NL)

(72) Inventors:
• KOHLER, Johannes, Richard, Karl
5500 AH Veldhoven (NL)
• UEBEL, Patrick, Sebastian
5500 AH Veldhoven (NL)
• ABDOLVAND, Amir
5500 AH Veldhoven (NL)

(74) Representative: ASML Netherlands B.V.
Corporate Intellectual Property
P.O. Box 324
5500 AH Veldhoven (NL)

(54) **RADIATION SOURCE ASSEMBLY FOR GENERATING BROADBAND RADIATION**

(57) Radiation source assembly and method for generating broadband radiation. The radiation source assembly comprises a solid core photonic crystal fiber, SC-PCF, having an input end and an output end, wherein the input end is configured to receive pulses of radiation from a pump source; a hollow core photonic crystal fiber, HC-PCF, that is filled with a gaseous working medium and arranged to receive pulses of radiation at an input end of the HC-PCF that are output from the output end of the SC-PCF; and wherein the SC-PCF is configured to broaden a spectrum of the pulses of radiation by providing nonlinearity at normal groupvelocity dispersion, and the HC-PCF is configured to generate broadband radiation by nonlinear interaction of the pulses of radiation with the gaseous working medium, and output the broadband radiation at an output end of the HC-PCF.

Fig. 8

EP 4 567 510 A1

## Description

<u>FIELD</u>

The present invention relates to a radiation source assembly and method for generating broadband radiation.

<u>BACKGROUND</u>

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

A known radiation source assembly comprises a pump source arranged to provide femtosecond pulses of radiation into the core of a gas-filled hollow core photonic crystal fiber (HC-PCF). Such an assembly may exploit white-light generation via Modulational Instability (MI), occurring when intense femtosecond pulses (e.g. of several μJ energies and durations of approximately 300 fs) undergo a spectral explosion as they propagate inside the gas-filled HC-PCF. Even though MI produces a high-power spectrum with good flatness, the supercontinuum explosion can cause substantial pulse-to-pulse variations of the spectrum and undesirably high intensity noise. A proven way to reduce these variations is addressing Soliton Self-Compression (SSC) instead of MI: this nonlinear scheme offers two orders-of-magnitude lower intensity noise and is accessible using the same HC-PCF for shorter input pulses at 10 times lower pulse energies. Such low energies result in gentle spectral broadening that is gradually reinforced by temporal compression of the pulse due to anomalous group-velocity dispersion (GVD) ultimately to a single several-femtosecond-long spike with a broad spectrum.

<u>SUMMARY</u>

The inventors have identified a number of drawbacks with radiation source assemblies known in the art.

In particular, the required volume of radiation source assemblies known in the art provide for challenging demands towards integration of the radiation source assembly into a machine such as a Metrology tool MT (e.g. a scatterometer, level sensor, or alignment sensor)

The required volume of the femtosecond pump source (e.g. a femtosecond laser) occupies a significant fraction of the total volume of the known radiation source assembly and due to size of the femtosecond pump source, the output beam has to propagate a relatively long distance through free-space until reaching the HC-PCF input. This means that changes in angular pointing lead to a larger misalignment of the focal spot with respect to the fiber core than for a shorter beam path.

Furthermore, during launching into the HC-PCF, the laser beam is focused into a high-pressure gas environment and can reach very high peak intensities. This high power may have disadvantages of causing heating and ionization of the materials in the system where spectral broadening takes place. This may cause damage and decrease the lifetime of the radiation source. Thermally-induced drifts and gas dynamics may severely impair light source performance and make continuous compensation via optomechanical alignment or gas-flow blockers necessary, respectively. These thermally-induced drifts may also lead to fiber damage by glass ablation.

The inventors have further recognized that to make such a known radiation source assembly common for both MI and SSC it would be necessary to implement extra pulse compression stages. Furthermore, the white-light spectrum generated via SSC is about an order-of-magnitude more sensitive to variations of parameters such as launched pump energy and pulse duration, so that the above-mentioned drifts result in a larger impact on the optical spectrum than when generating white light via MI. As a result, advanced feedback would be required.

According to one aspect of the present disclosure there is provided a radiation source assembly for generating broadband radiation, the radiation source assembly comprising: a solid core photonic crystal fiber, SC-PCF, having an input end and an output end, wherein the input end is configured to receive pulses of radiation from a pump source; a hollow core photonic crystal fiber, HC-PCF, that is filled with a gaseous working medium and arranged to receive pulses of radiation at an input end of the HC-PCF that are output from the output end of the SC-PCF; and wherein the SC-PCF is configured to broaden a spectrum of the pulses of radiation by providing nonlinearity at normal group-velocity dispersion, and the HC-PCF is configured to generate broadband radiation by nonlinear interaction of the pulses of radiation with the gaseous working medium, and output the broadband radiation at an output end of the HC-PCF.

The spectrally broadened pump radiation after the SC-PCF may enhance white-light conversion efficiency in the subsequent HC-PCF by up to 100% for the same input parameters (e.g. energy, duration etc.) of the pulses of radiation from the pump source, compared to the scenario whereby the SC-PCF is not used.

The output end of the SC-PCF may be coupled to the input end of the HC-PCF.

The radiation source assembly may further comprise a gas cell enclosing at least a portion of the HC-PCF, wherein the gas cell is filled with a gaseous working medium.

The input end of the SC-PCF and the output end of the SC-PCF may be enclosed within the gas cell, and the gas cell may fully enclose the HC-PCF. This prevents gas flow through hollow channels in the SC-PCF.

The output end of the SC-PCF may be enclosed within the gas cell, and SC-PCF may extend such that the input end of the SC-PCF is external to the gas cell, and the gas cell may fully enclose the HC-PCF. Since the input end of the SC-PCF is external to the gas cell, this advantageously provides for improved stability of pump-radiation incoupling at the input end of the SC-PCF. In this way it is possible to avoid gas turbulences at the HC-PCF input, as well as reduce thermally-driven gas flow through the HC-PCF because the flow through the narrow channels in SC-PCFs is much weaker than through the hollow channels in the HC-PCF.

The output end of the HC-PCF may be enclosed within the gas cell; and the input end of the HC-PCF, and the SC-PCF, are external to the gas cell. Again, since the input end of the SC-PCF is external to the gas cell, this advantageously provides for improved stability of pump-radiation incoupling at the input end of the SC-PCF. By only enclosing the output end of the HC-PCF this advantageously reduces the size of the gas cell. This advantageously reduces the size of the radiation source assembly and makes it easier to manufacture.

The radiation source may further comprise a further hollow core photonic crystal fiber, FHC-PCF, wherein the output end of the SC-PCF may be coupled to an input end of the FHC-PCF, and the input end of the HC-PCF may be coupled to an output end of the FHC-PCF. The insertion of the FHC-PCF between the SC-PCF and the HC-PCF may advantageously enable the usage of a picosecond pump source for generating the broadband radiation by way of Soliton Self-Compression.

The radiation source may further comprise: a gas cell enclosing at least a portion of the HC-PCF, wherein the gas cell is filled with the gaseous working medium; and a further gas cell, wherein the further gas cell encloses at least one end of the FHC-PCF.

The further gas cell may be filled with a further gaseous working medium.

Alternatively, the further gas cell may comprise a vacuum.

The output end of the SC-PCF may be enclosed within the further gas cell.

The SC-PCF may extend such that the input end of the SC-PCF is external to the gas cell.

The radiation source assembly may further comprise a mating fiber to couple the input end of the HC-PCF to the output end of the FHC-PCF.

The input end of the HC-PCF may be coupled to an output end of the FHC-PCF by way of a collapsed portion of the HC-PCF and/or a collapsed portion of the FHC-PCF.

The radiation source assembly may further comprise the pump source.

The pulses of radiation may have a duration of 100 - 250 fs.

The pulses of radiation may have a duration of at least 250 fs.

The pulses of radiation may have a duration of at least 1 ps, optionally at least 1.5 ps, optionally at least 2 ps, optionally at least 5 ps, optionally at least 10 ps. The use of a picosecond pump source (e.g. a picosecond laser) advantageously enables the size of the radiation source assembly to be reduced (e.g. compared with using a femtosecond pump source) due to the lower footprint of a picosecond pump source, whilst the picosecond pump source is still able to provide pulses with pulse parameters (e.g. energy, duration etc.) that still allow for broadband radiation generation using gas-filled HC-PCF technology. An advantage of using picosecond pulses for the broadband radiation generation is that the pulses will experience a much smaller peak-power decay due to dispersion than femtosecond pulses.

The gaseous working medium may comprise a noble gas.

The broadband radiation may comprise supercontinuum radiation.

According to another aspect of the present disclosure there is provided a lithographic apparatus comprising the radiation source assembly of any of the embodiments described herein.

According to another aspect of the present disclosure there is provided a metrology apparatus comprising the radiation source assembly of any of the embodiments described herein.

According to another aspect of the present disclosure there is provided a method for generating broadband radiation, the method comprising: providing pulses of radiation from a pump source to an input end of a solid core photonic crystal fiber, SC-PCF, having the input end and an output end, wherein the SC-PCF is configured to broaden a spectrum of the pulses of radiation by providing nonlinearity at normal group-velocity dispersion; generating broadband radiation by nonlinear interaction of the pulses of radiation with a gaseous working medium in a hollow core photonic crystal fiber, HC-PCF, that is arranged to receive pulses of radiation at an input end of the HC-PCF that are output from the output end of the SC-PCF; and outputting the broadband radiation at an output end of the HC-PCF.

## BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic representation of a scatterometer;
- Figure 5 depicts a schematic representation of a level sensor;
- Figure 6 depicts a schematic representation of an alignment sensor;
- Figure 7a depicts a schematic representation of a radiation source assembly for generating output broadband radiation according to an embodiment of the present disclosure;
- Figure 7b depicts a schematic representation of a radiation source assembly for generating output broadband radiation according to an embodiment of the present disclosure;
- Figure 7c depicts a schematic representation of a radiation source assembly for generating output broadband radiation according to an embodiment of the present disclosure;
- Figure 8 illustrates spectra of broadband radiation output from a radiation source assembly without any solid core photonic crystal fiber and when a solid core photonic crystal fiber is included;
- Figure 9 depicts a schematic representation of a radiation source assembly for generating output broadband radiation according to an embodiment of the present disclosure;
- Figure 10 depicts a mating fiber at an interface between two hollow core photonic crystal fibers in the radiation source assembly of Figure 9;
- Figure 11a illustrates the evolution of the power spectrum and the temporal evolution of the pulse power in each of the solid core photonic crystal fiber, and the two hollow core photonic crystal fibers included in the radiation source assembly of Figure 9;
- Figure 11b illustrates spectra of broadband radiation output from a radiation source assembly of Figure 9;
- Figure 12 illustrates normalized peak-power evolution along a solid core photonic crystal fiber;
- Figure 13 is a schematic cross sectional view of a hollow core optical fiber that may form part of a radiation source assembly according to embodiments of the present disclosure in a transverse plane (i.e. perpendicular to an axis of the optical fiber); and
- Figures 14a and 14b schematically depict the transverse cross-sections of examples of hollow core photonic crystal fiber designs for supercontinuum generation.

## DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

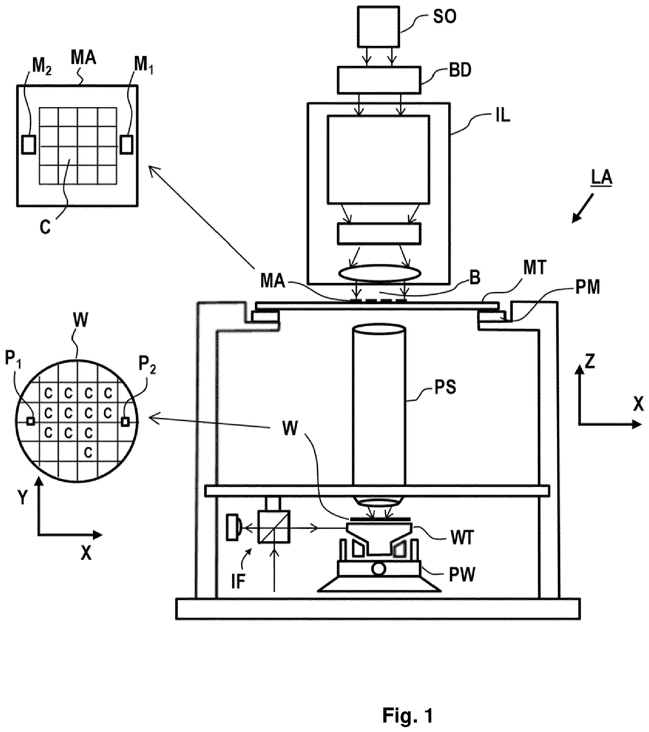

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) T constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support T, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

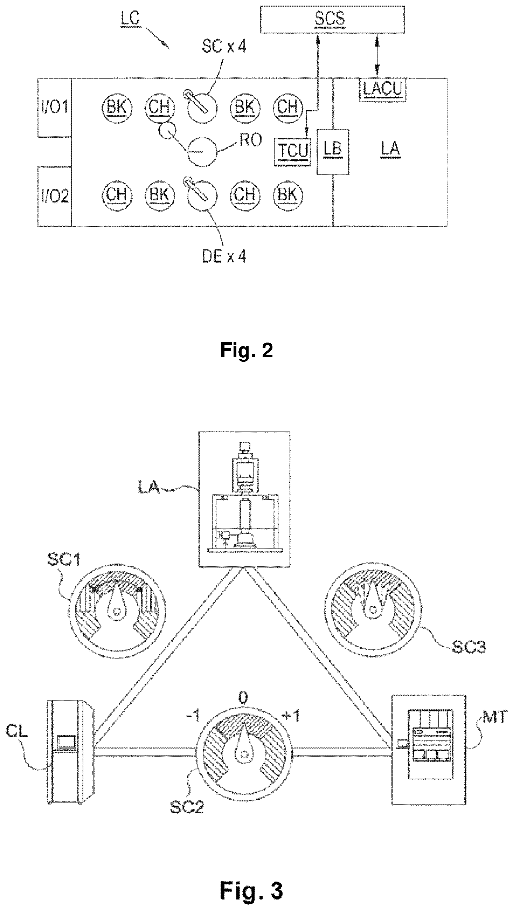

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometer illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation, which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

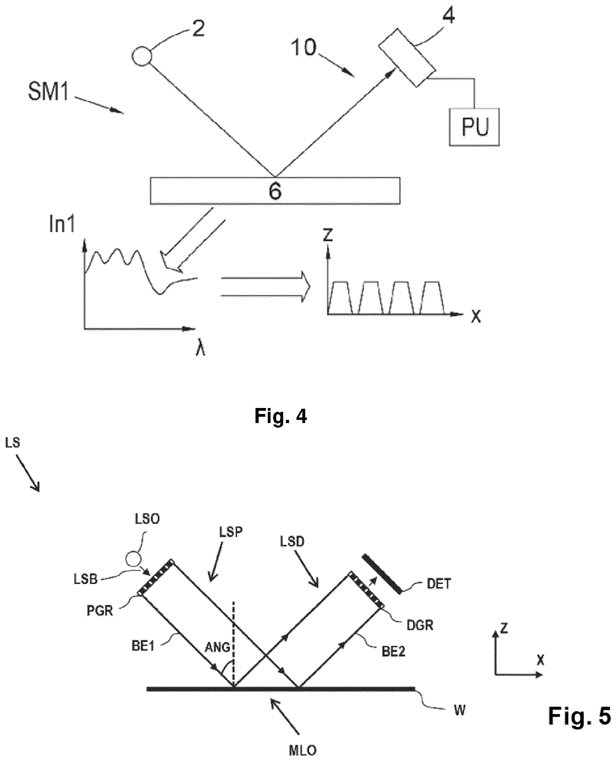

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity INT as a function of wavelength $\lambda$) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

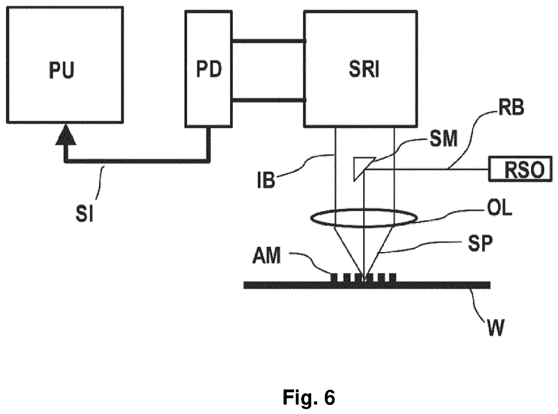

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source assembly to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools.

Embodiments of the present disclosure relate to a radiation source assembly for generating broadband radiation, the radiation source assembly comprising: a solid core photonic crystal fiber, SC-PCF, having an input end and an output end, wherein the input end is configured to receive pulses of radiation from a pump source; a hollow core photonic crystal fiber, HC-PCF, that is filled with a gaseous working medium and arranged to receive pulses of radiation at an input end of the HC-PCF that are output from the output end of the SC-PCF; wherein the SC-PCF is configured to broaden a spectrum of the pulses of radiation by providing nonlinearity at normal group-velocity dispersion, and the HC-PCF is configured to generate broadband radiation by nonlinear interaction of the pulses of radiation with the gaseous working medium, and output the broadband radiation at an output end of the HC-PCF.

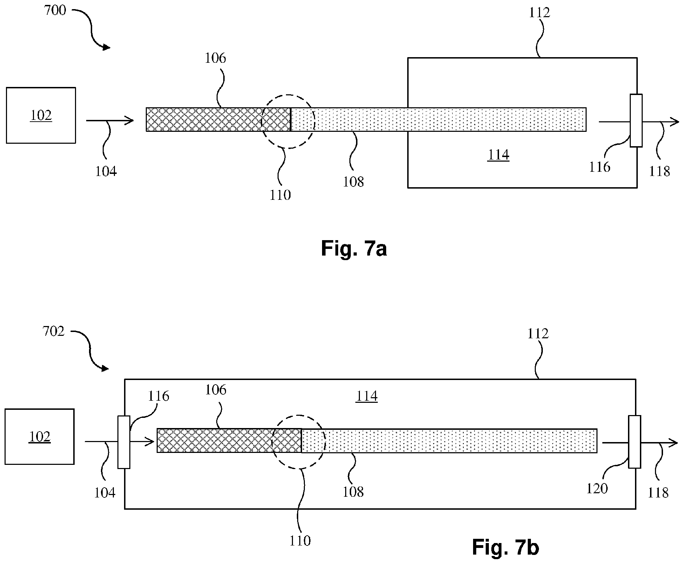

Figure 7a depicts a radiation source assembly 700 for generating output broadband radiation 118 by spectral broadening according to one embodiment. The radiation source assembly 700 comprises a SC-PCF 106 having an input end and an output end, wherein the input end of the SC-PCF 106 is arranged to receive pulses of input radiation 104 from a pump source 102. The fiber material of the SC-PCF 106 may be plastic material, like PMA; glass, like silica; or soft glass. The pump source 102 may form part of the radiation source assemblies described herein or may be connected to them.

The pulses of input radiation 104 may comprise electromagnetic radiation of one or more wavelengths between 200 nm and 2 μm. The input radiation 104 may for example comprise electromagnetic radiation with a wavelength of 1.03 μm, 515 nm, or 343 nm. The pulses of input radiation 104 may be provided in the infrared and/or visible part of the spectrum. The pulses of input radiation 104 may have a narrow wavelength range, which may be a single wavelength. The wavelength of the pulses of input radiation 104 may be set so that it can be provided by a commercially available source. Examples of wavelengths provided by readily available sources include wavelengths of 1550 nm, 1030 nm, and wavelengths in the range of 700 - 800 nm.

The repetition rate of the input radiation 104 may be of an order of magnitude of 1 kHz to 100 MHz, e.g. in a range from 1 - 20 MHz, for example 2.5 MHz, 5 MHz, 8 MHz, 10 MHz, or 15 MHz. The average power of input radiation 104 may be between 100 mW to several 100 W. The average power of input radiation 104 may for example be 20 - 50 W.

The input radiation 104 may be coherent radiation. The input radiation 104 may be collimated radiation, an advantage of which may be to facilitate and improve the efficiency of coupling the input radiation 104 into the SC-PCF 106. The input radiation 104 may comprise a single frequency, or a narrow range of frequencies. The input radiation 104 may be generated by a laser.

The SC-PCF 106 is coupled to a HC-PCF 108 at an interface 110. In the embodiment of Figure 7a, the HC-PCF 108 is arranged to receive pulses of radiation at an input end of the HC-PCF 108 directly from the output end of the SC-PCF 106.

The HC-PCF 108 is filled with a gaseous working medium 114. In the embodiment of Figure 7a this is achieved by enclosing the output end of the HC-PCF 108 within a gas cell 112 The gas cell 112 may also be referred to as a housing, container or reservoir. The gas cell 112 is configured to contain the gaseous working medium 114. The gas cell 112 may comprise one or more features, known in the art, for controlling, regulating, and/or monitoring the composition of the gaseous working medium 114 inside the gas cell 112. The gaseous working medium 114 may comprise any monatomic (noble) gas such as Helium, Neon, Argon, Krypton, or Xenon.

As shown in Figure 7a, the input end of the SC-PCF 106 may be external to the gas cell 112. That is, the input end of the SC-PCF 106 is not placed in a high-pressure gas environment in the embodiment of Figure 7a. As shown in Figure 7a, the interface 110 between the SC-PCF 106 and the HC-PCF 108 may be external to the gas cell 112.

In embodiments of the present disclosure, the SC-PCF 106 is configured to broaden a spectrum of the pulses of the input radiation 104 by providing nonlinearity at normal group-velocity dispersion. In particular, the SC-PCF 106 is configured to broaden a spectrum of the pulses of the input radiation 104 by way of Self-Phase Modulation (SPM) before outputting the radiation pulses e.g. supplying the radiation pulses to the HC-PCF 108.

In the embodiments of Figure 7a-c the HC-PCF 108 is configured to generate broadband radiation 118 by nonlinear interaction of the pulses of radiation with the gaseous working medium 114, and output broadband radiation 118 at an output end of the HC-PCF. Broadband radiation may be radiation that spans across a wavelength range significantly larger than narrowband or single wavelength radiation. Broadband radiation comprises a continuous, or substantially continuous range of wavelengths. A range of wavelengths may also referred to as a spectrum/spectral range. The continuous range of wavelengths may be over a range of at least 10 nm, 20 nm, 50nm, 100 nm, 200nm, 400nm or more. The broadband radiation may have gaps in the wavelength range. These gaps may separate one or more continuous sub ranges within the wavelength range. A substantially continuous range may have discrete wavelength(s) and/or narrow wavelength band(s) missing from the range, and still be considered continuous. The power spectral density may be non-continuous, the power may vary across the broadband wavelength range.

In the embodiment of Figure 7a the gas cell 112 comprises a transparent window 116, forming part of a wall of the gas cell 112. In use, the transparent window 116 is located proximate to the output end of the HC-PCF 108. The transparent window 116 may be transparent for at least the frequencies of the broadband output radiation 118. The transparent window 116 may form an airtight seal within the walls of the gas cell 112 so that the gaseous working medium 114 may be contained within the reservoir RSV. It will be appreciated that the gas WM may be contained within the gas cell at a pressure different to the ambient pressure of the gas cell. In this context a window may be transparent for a frequency if at least 50%, 75%, 85%, 90%, 95%, or 99% of incident radiation of that frequency on the window is transmitted through the window.

The broadband radiation 118 provided by the radiation source assemblies described herein may have an average output power of at least 1 W. The average output power may be at least 5 W. The average output power may be at least 10 W. The broadband radiation 118 may be pulsed broadband output radiation.

The broadband radiation 118 provided by the radiation source assemblies described may be collimated and/or may be coherent. The broadband range of the output radiation 118 may be a continuous range, comprising a continuous range of radiation frequencies. The broadband radiation 118 may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 500 nm - 900 nm. The lower bound for this supercontinuum radiation wavelength range may be at least 100 nm, at least 200 nm, at least 300 nm, or at least 400 nm. The upper bound for this supercontinuum radiation wavelength range may be 2000 nm or less, 1800 nm or less, 1500 nm or less, or 1200 nm or less. In one example, the broadband light source assembly 100 is configured to generate supercontinuum radiation in a wavelength range of 485-1800 nm. The supercontinuum radiation may comprise white light.

It will be understood by the skilled person that a "supercontinuum" according to the present disclosure refers generally to a continuous spectral power distribution that exhibits substantial flatness. In some examples, the supercontinuum comprises a continuous spectral power distribution over a wavelength range of at least 100 nm. In some examples, the flatness of the supercontinuum corresponds to a peak to trough spectral power ratio of less than 100:1, or 20 dB. In some examples, the flatness of the supercontinuum corresponds to a peak to trough spectral power ratio of less than 10:1, or 10 dB.

Figure 7b depicts a radiation source assembly 702 for generating output broadband radiation 118 by spectral broadening according to another embodiment.

As shown in Figure 7b, both the input end of the SC-PCF 106 and the output end of the SC-PCF 106 are enclosed within the gas cell 112, and the gas cell fully encloses the HC-PCF 108. That is, both the input end of the HC-PCF 108 and the output end of the HC-PCF 108 are enclosed within the gas cell 112.

In the embodiment of Figure 7b the gas cell 112 comprises a first transparent window 116 located proximate to an input end of the SC-PCF 106. The first transparent window 116 (also referred to as input port, or input optical port) may be transparent for at least the received input radiation frequencies, so that received input radiation 104 (or at least a large portion thereof) may be coupled into the SC-PCF 106 located inside the gas cell 112. In use, an output end of the HC-PCF 108 may be proximate to a second transparent window 120 (also referred to as output port, or output optical port). The second transparent window 120 may be transparent for at least the frequencies of the broadband output radiation 120 of the radiation source assembly 702.

As shown in Figure 7b, the interface 110 between the SC-PCF 106 and the HC-PCF 108 may be inside the gas cell 112.

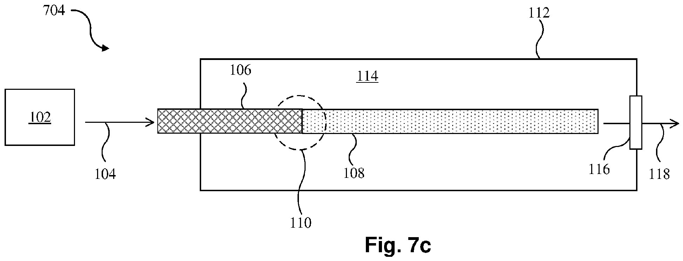

Figure 7c depicts a radiation source assembly 704 for generating output broadband radiation 118 by spectral broadening according to a further embodiment.

As shown in Figure 7c, the output end of the SC-PCF 106 is enclosed within the gas cell 112, and the SC-PCF 106 extends such that the input end of the SC-PCF 106 is external to the gas cell 106, and the gas cell 112 fully encloses the HC-PCF 108. That is, both the input end of the HC-PCF 108 and the output end of the HC-PCF 108 are enclosed within the gas cell 112.

As shown in Figure 7c, the input end of the SC-PCF 106 may be external to the gas cell 112. That is, the input end of the SC-PCF 106 is not placed in a high-pressure gas environment in the embodiment of Figure 7c. As shown in Figure 7c, the interface 110 between the SC-PCF 106 and the HC-PCF 108 may be inside the gas cell 112.

In the embodiment of Figure 7c the gas cell 112 comprises a transparent window 116, forming part of a wall of the gas cell 112. In use, the transparent window 116 is located proximate to the output end of the HC-PCF 108.

In the embodiments of Figures 7a-c the broadband radiation may be generated in the HC-PCF 108 by way of the MI spectral broadening process or the SSC spectral broadening process. The inventors have identified that it is the duration and energy of the pulses of the input radiation 104 which are the most significant factors in dictating which broadening process happens. The lengths of the SC-PCF 106 and HC-PCF 108, and the pressure of gaseous working medium 114 may also play a part in dictating which broadening process happens.

In the embodiments of Figures 7a-c the broadband radiation may be generated in the HC-PCF 108 by way of the MI spectral broadening process when the pulse duration for the input radiation 104 is at least 500 fs, for example between 500fs and 1ps. The pulse duration for the input radiation 104 may be at least 1 ps, optionally at least 1.5 ps, optionally at least 2 ps, optionally at least 5 ps. The maximum pulse duration for the pulses of input radiation may be 10 ps. In these embodiments to achieve sufficient nonlinear broadening with the lower peak power at picosecond pulse durations, higher gas pressures and/or heavier gases may be required. For example, the working medium WM may comprise a noble gas such as Krypton or Xenon. The energy of the pulses of the input radiation may be in a range of 0.1 $\mu$J to 500 $\mu$J. The energy of the pulses of the input radiation may be in a range of 0.1 $\mu$J to 100 $\mu$J, for example 1 - 20 $\mu$J. The length of the SC-PCF 106 may be in a range of 0.1 cm to 100 cm, the length of the HC-PCF 108 may be in a range of 1 cm to 10 m.

The inventors have observed that by coupling the SC-PCF 106 to the HC-PCF 108 the white-light conversion efficiency in the gas-filled HC-PCF 108 can be significantly improved if the spectrum after the SC-PCF 106 extends beyond the frequencies of the first-order MI gain bands (e.g. $\omega_0 \pm \omega_{MI}$). This is because the MI pulse explosion is triggered by gradual amplification of a noisy temporal modulation around these frequencies atop of the pulse. In case of narrow-band pump radiation (e.g. 1.5 ps pulses of 4.6 $\mu$J energy), extremely weak "quantum" noise is amplified, whereas pump radiation overlapping with these gain bands offers significantly larger "noise seed" to be amplified.

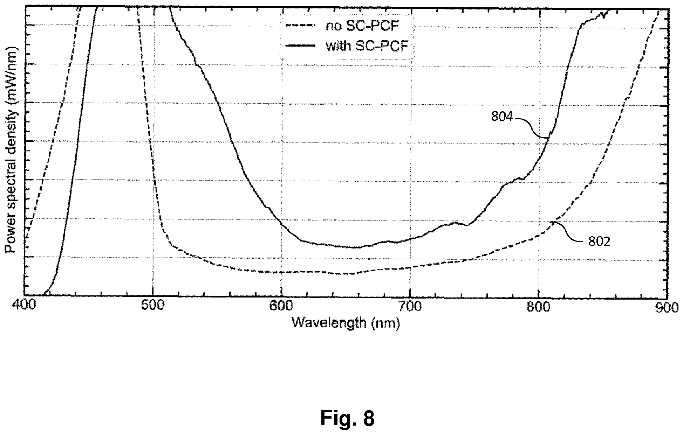

Figure 8 compares the output spectra 802 obtained without any SC-PCF 106 being present and with the output spectra 804 obtained with a 16cm long SC-PCF 106 coupled to the HC-PCF 108. The output spectra 802 and the output spectra 804 were both obtained using pulses of input radiation 104 having a pulse duration of 1.5 ps and pulse energy of 4.6 $\mu$J. As can be seen from Figure 8, the broader input spectrum provided by the SC-PCF 106 yields a 100% higher PSD in the region of the trough (at -640 nm). The results shown in Figure 8 are independent of the particular arrangement of Figures 7a-c that is used for the radiation source assembly. In embodiments of the present disclosure whereby the broadband radiation is generated in the HC-PCF 108 by way of the MI spectral broadening process the power spectral density in the entire wavelength band of the broadband output radiation 118 may be at least 2 mW/nm.

The nonlinear dynamics of an ultrashort laser pulse undergoing MI along a gas-filled HC-PCF is largely dictated by the temporal envelope of the instantaneous pulse power, i.e., its full-width half-maximum duration and its peak power. More specifically, a transform-limited pulse (whose duration matches to lower limit supported by a given frequency spectrum) and a strongly chirped pulse with a much broader spectrum, but otherwise identical effective duration and peak power produce (almost perfectly) identical propagation dynamics and output spectrum. This has been confirmed by the inventor's numerical pulse-propagation simulations which plot the nonlinear evolution of effectively 5ps long pulses with transform-limited durations $\tau$TL of 250 fs (chirped), 2.0 ps (chirped) and 5.0 ps (unchirped). Across the plots, the nonlinear length and thus the MI-length is kept constant only by varying the input pulse energy. This means that it is possible to guide picosecond pump pulses via the SC-PCF 106 directly to the gas-filled HC-PCF 108, so that dramatic spectral broadening via MI can still occur even though the pulse may have spectrally broadened before via SPM in the SC-PCF 106. This is because SPM leaves the temporal envelope of the instantaneous pulse power fully unchanged. As is known to persons skilled in the art, in a chirped pulse, the instantaneous frequency of the electric-field oscillation changes smoothly along its temporal envelope. A pulse with constant instantaneous frequency along its envelope is referred to as "transform limited".

In the embodiments of Figures 7a-c the broadband radiation may alternatively be generated in the HC-PCF 108 by way of the SSC spectral broadening process when the pulse duration for the input radiation 104 is in a range of 100 - 250 fs, and the maximum energy of the pulses of the input radiation 104 is 5 $\mu$J, optionally 4 $\mu$J, optionally 3 $\mu$J, optionally 2 $\mu$J. The energy of the pulses of the input radiation 104 may be between 0.2 $\mu$J and 2 $\mu$J, for example 0.5 $\mu$J. Compared to a case in which no SC-PCF 106 is used, the length of the HC-PCF 108 may be reduced significantly, for example by 10%, or optionally by 20%, or optionally by 50%. At the same time, an improved conversion efficiency from the pump radiation into the broadband spectrum is obtained, for example, by 10%, or optionally by 20% or optionally 50% at otherwise identical parameters of the radiation at the SC-PCF 106 input. The length of the SC-PCF 106 may be in a range of 0.5 - 5cm, for example 1-3 cm. That is, the length of the HC-PCF 108 may be in a range of 5cm - 2m.

In the embodiments of Figures 7a-c described above the output end of the SC-PCF 106 is directly coupled to the input end of the HC-PCF 108 at the interface 110. The interface 110 may be implemented by any known method. In one example, the output end of the SC-PCF 106 is coupled to the input end of the HC-PCF 108 at the interface 110 by "butt" coupling where the SC-PCF 106 and the HC-PCF 108 are "butt" coupled via an air gap. In another example, the output end of the SC-PCF 106 is coupled to the input end of the HC-PCF 108 at the interface 110 by a direct splice. In particular, the SC-PCF 106 and the HC-PCF 108 may be spliced without active mode field diameter (MFD) matching. In a further example, the SC-PCF 106 and the HC-PCF 108 may be spliced with active mode field diameter (MFD) matching. This may be achieved by splicing an intermediate section to match the mode field diameters. For example the SC-PCF 106 may have a section with constant MFD, adjacent to an adiabatically down-tapered section or an up-tapered section which is coupled to the HC-PCF 108.

In other embodiments of the present disclosure, the output end of the SC-PCF 106 is not directly coupled to the input end of the HC-PCF 108 but the SC-PCF 106 is still in fluidic communication with the HC-PCF 108.

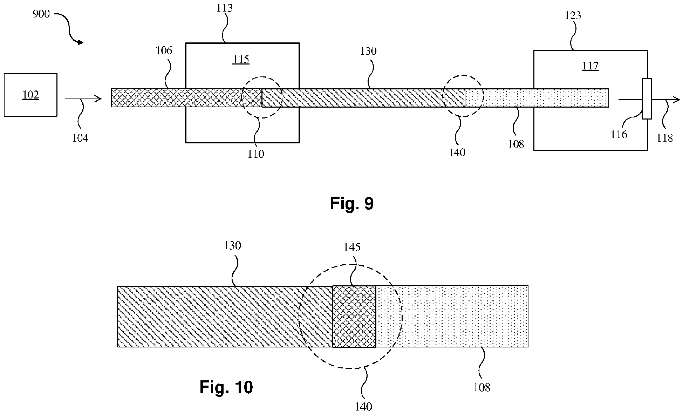

Figure 9 depicts a radiation source assembly 900 for generating output broadband radiation 118 by spectral broadening according to such an embodiment whereby the output end of the SC-PCF 106 is not directly coupled to the input end of the HC-PCF 108.

As shown in Figure 9, in addition to the SC-PCF 106 and the HC-PCF 108 the radiation source assembly 900 further comprises a further hollow core photonic crystal fiber, FHC-PCF, 130, otherwise referred to herein as a dispersion compensating hollow core photonic crystal fiber DC-HCPCF.

The output end of the SC-PCF 106 is coupled to an input end of the FHC-PCF 130 at an interface 110, and the input end of the HC-PCF 108 is coupled to an output end of the FHC-PCF 130 at an interface 140. Methods to couple the SC-PCF 106 to a HC-PCF such as the FHC-PCF 130 at the interface 110 have been described above. The input end of the HC-PCF 108 may be coupled to the output end of the FHC-PCF 130 at the interface 140 using a section of mating fiber 145 without any hollow channels. This section may be from another type of fiber (e.g. a "coreless" fiber) or generated by collapsing one or both of the HC-PCFs involved.

The FHC-PCF 130 may be filled with a gaseous working medium 115. In the embodiment of Figure 9 this is achieved by enclosing the input end of the FHC-PCF 130 within a gas cell 113. The gas cell 113 encloses at least one end of the FHC-PCF 130. The gas cell 113 may also be referred to as a housing, container or reservoir. The gas cell 113 is configured to contain the gaseous working medium 115. The gas cell 113 may comprise one or more features, known in the art, for controlling, regulating, and/or monitoring the composition of the gaseous working medium 115 inside the gas cell 113. The gaseous working medium 115 may comprise a light monatomic (noble) gas such as Helium or Neon. The gaseous working medium 115 and the FHC-PCF 130 are selected such that the pump wavelength of the input radiation 104 is within a range corresponding to an anomalous group velocity dispersion regime of the gaseous working medium 115.

Alternatively no gaseous working medium 115 may be present in the gas cell 113 such that the gas cell 113 comprises a vacuum.

The HC-PCF 108 is filled with a gaseous working medium 117. In the embodiment of Figure 9 this is achieved by enclosing the output end of the HC-PCF 108 within a gas cell 123. The gas cell 123 encloses an output end of the HC-PCF 108. The gas cell 123 may also be referred to as a housing, container or reservoir. The gas cell 123 is configured to contain a gaseous working medium 117. The gas cell 123 may comprise one or more features, known in the art, for controlling, regulating, and/or monitoring the composition of the gaseous working medium 117 inside the gas cell 123. The gaseous working medium 117 may comprise a monatomic (noble) gas such as Argon, Krypton, or Xenon.

At least one end of the FHC-PCF 130 is in a different environment than the HC-PCF 108.

The HC-PCF 108 exhibits less dispersion than the FHC-PCF 130, and whilst the HC-PCF 108 exploits non-linearity properties of the hollow core optical fiber to broaden a spectrum of the radiation, it is desirable for the FHC-PCF 130 to yield negligible nonlinearity. The nonlinearity in the FHC-PCF 130 may be at least ten times lower than in the HC-PCF 108, for example a hundred times or a thousand time lower than in the HC-PCF 108. In embodiments whereby the FHC-PCF 130 is filled with a gaseous working medium 115, the gaseous working medium 115 may be a lighter gas than that used for the gaseous working medium 117. Alternatively or additionally, the gaseous working medium 115 may be a lower pressure than that used for the gaseous working medium 117.

In the embodiment of Figure 9, the pulse duration for the input radiation 104 may be at least 250s. The pulse duration for the input radiation 104 may be at least 500 fs, for example between 500fs and 1ps. The pulse duration for the input radiation 104 may at least 1 ps, optionally at least 1.5 ps, optionally at least 2 ps, optionally at least 5 ps, optionally at least 10 ps.

White-light generation via direct Soliton Self-Compression of picosecond laser pulses is impossible (in case of non-zero MI gain), because the required HC-PCF length $L_{SSC}$ will always be longer than the length $L_{MI}$. As a result, the MI pulse explosion always happens before the pulse can self-compress. This can be readily estimated using the analytical empirical relations for the SSC length:

$$L_{SSC} \approx \sqrt{\frac{\left(\frac{\tau_{FWHM}}{2\sqrt{\ln 2}}\right)^2 c_0 A_{eff}}{|\beta_2(\omega_0)|\omega_0 n_2 P_0}} + \frac{1.7 c_0 A_{eff}}{\omega_0 n_2 P_0},$$

and for the MI length:

$$L_{\mathrm{MI}} \approx \frac{15 c_0 A_{\mathrm{eff}}}{\omega_0\, n_2 P_0},$$

where $\tau_{\mathrm{FWHM}}$ is the full-width half-maximum pulse duration, $A_{\mathrm{eff}}$ is the effective area of the fiber mode, $\beta_2(\omega_0)$ is the group velocity at the pump-laser frequency $\omega_0$, $n_2$ is the nonlinear refractive index of the gas and $P_0$ the peak power of the pump pulse.

As a solution to this, the SC-PCF 106 spectrally broadens the picosecond pulses of input radiation 104 by way of Self-Phase Modulation (SPM) before supplying the radiation pulses to the FHC-PCF 130. As an alternative to free-space pulse compression using chirped mirrors, the FHC-PCF 130 providing anomalous GVD is attached to the SC-PCF 106. With the gas parameters chosen to yield negligible nonlinearity, the spectrally broad and more positively chirped pulse than at the input of the SC-PCF 106 (a characteristic of SPM) compresses temporally as it propagates through the FHC-PCF 130. The radiation pulse propagates through the FHC-PCF 130 before entering the HC-PCF 108. The HC-PCF 108 is configured to generate broadband radiation 118 by nonlinear interaction of the pulses of radiation with the gaseous working medium 114, and output broadband radiation 118 at an output end of the HC-PCF. In the embodiment of Figure 9 the broadband radiation 118 is generated in the HC-PCF 108 by way of the SSC spectral broadening process.

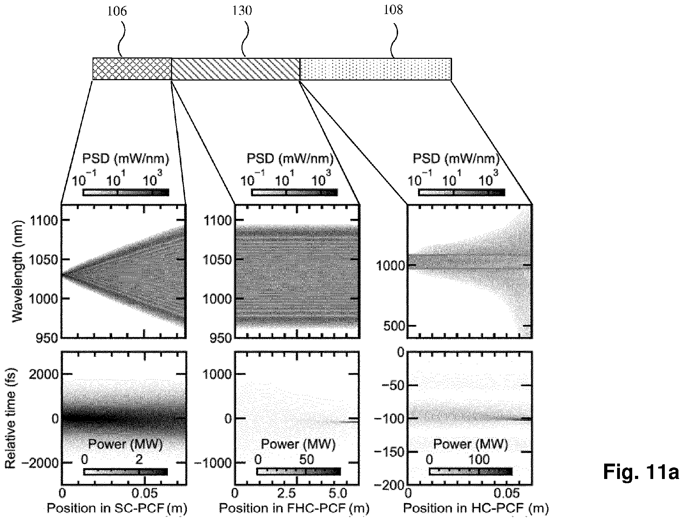

The inventors have observed that a pulse duration of approximately 2 ps at the output of the SC-PCF 106 can be reduced to approximately 30 fs when a 5m long FHC-PCF 130 is used. This is illustrated in Figure 11a.

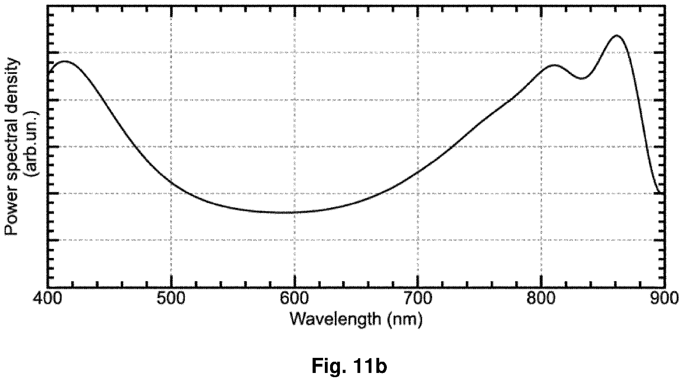

Figure 11a illustrates on the left-hand side the spectral broadening of a 1.5 ps long input pulse of energy ~5.1 $\mu$J in a 7.5 cm length of SC-PCF 106. Figure 11a centrally illustrates dispersion compensation in a 5m length of FHC-PCF 130 filled with 1 bar of Helium. Figure 11a illustrates on the right-hand side the Soliton Self-Compression of the approximately 30 fs long compressed pulse in a 5cm length of the HC-PCF 108 filled with 20 bar of Argon. In Figure 11a the evolution of the power spectrum is shown in the top row, while the bottom row depicts the temporal evolution of the pulse power. Figure 11b illustrates the output spectrum of the broadband radiation 118 obtained with SSC.-In embodiments of the present disclosure whereby the broadband radiation is generated in the HC-PCF 108 by way of the SSC spectral broadening process the power spectral density in the entire wavelength band of the broadband output radiation 118 may be at least 1 mW/nm.

The length of the FHC-PCF 130 may be between 10cm - 10m. The length of the FHC-PCF 130 may be between 1 - 10m, for example between 1 - 5m. In the radiation source assembly 900, the length of the HC-PCF 108 may be in a range of 1 - 100 cm, for example 5 cm, 10 cm, or 20 cm.

In embodiments of the present disclosure the length of SC-PCF 106 is predominantly limited by its moderate normal group-velocity dispersion, which will cause the pump pulse to temporally stretch and therefore loose peak power (important for white-light generation in the HC-PCF 108). Its dependence on functional-fiber length *LFF* is given by:

$$P_0(L_{FF}) = 0.88 \frac{E_p}{\tau_{IN}\sqrt{1+(4\ln(2))^2\,(\beta_2(\omega_0)\times L_{FF})^2/\tau_{IN}^4}},$$

where $\beta_2(\omega_0)$ is the group-velocity dispersion at (angular) frequency $\omega_0$, $\tau_{IN}$ is the full-width half-maximum input pulse duration at the start of the delivery fiber and $E_P$ the pulse energy (the factor '0.88' is valid for a Gaussian-shaped pulse).

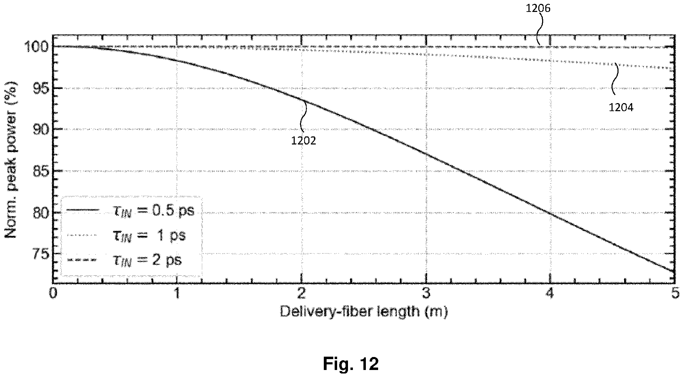

Figure 12 shows the normalized peak-power evolution along a 5m long SC-PCF 106 with (positive) GVD $\beta_2$ = 170 fs$^2$/cm at 1030 nm wavelength, for three different input-pulse durations: 500 fs (line 1202), 1 ps (line 1204) and 2 ps (line 1206). The plots in Figure 12 show another advantage of using picosecond pulses for white-light generation: they will experience a much smaller peak-power decay than femtosecond pulses. For example, the peak power of a 2 ps long pulse stays almost constant over 5 m of the length of the SC-PCF 106, while 1 and 0.5 ps-long-pulses experience a decay by ~3% and 27%, respectively. Because of this, chirp compensation after propagation of picosecond pulses (e.g. pulses having a duration of at least 1 ps or at least 2 ps) through the SC-PCF 106 is largely unneccessary.

To avoid damage to the fiber material of the SC-PCF 106 (e.g. its glass core) parameters may be selected so that (1) the peak power of the pulses remains below the critical power of self-focusing; and (2) the fluence (energy per effective area of the fiber mode) remains below the material damage limit. In order to keep the fluence as low as possible, it is desirable to use solid-core PCFs designed for a large effective mode area ("LMA"). As the upper limit of fluence scales with $\tau_p^{-0.5}$ ($\tau_p$: pulse duration), the inventors have observed that the maximum permissible energy is much higher for picosecond than for femtosecond pulses. In particular, the inventors have observed that commercially available LMA-PCFs with different effective mode areas of 590, 300 and 200 $\mu$m$^2$ will likely not be damaged by 10 ps long pulses whose energies are below ~20 $\mu$J, ~16 $\mu$J and ~8 $\mu$J, respectively.

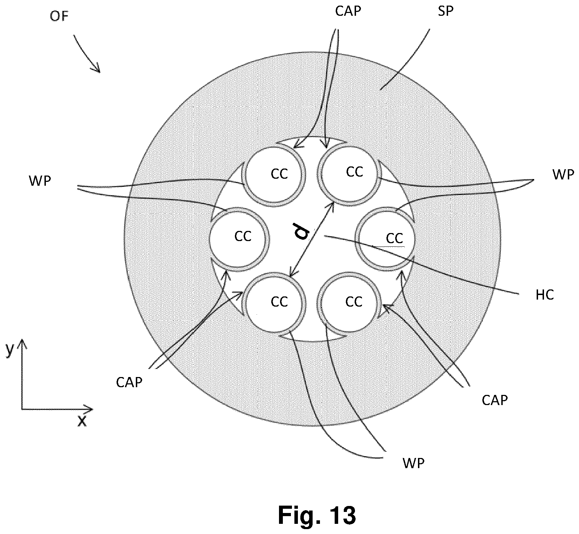

Figure 13 is a schematic cross sectional view of an optical fiber OF in a transverse plane which may be used in the radiation source assemblies described herein. The optical fiber OF may correspond to the HC-PCF 108 or the FHC-PCF 130. Further embodiments similar to the practical example of the fiber of Figure 13 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 13 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core COR; a cladding portion surrounding the hollow core COR; and a support portion SP surrounding and supporting the cladding portion. The optical fiber OF may be considered to comprise a body (comprising the cladding portion and the support portion SP) having a hollow core COR. The cladding portion comprises a plurality of anti-resonance elements for guiding radiation through the hollow core COR. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally supressed. In some embodiments, the capillary wall portion WP may have a thickness between 0.01 - 10.0 $\mu$m.

It will be appreciated that, as used herein, the term cladding portion is intended to mean a portion of the optical fiber OF for guiding radiation propagating through the optical fiber OF (i.e. the capillaries CAP which confine said radiation within the hollow core COR). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core COR. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 $\mu$m. The diameter d of the hollow core HC may affect the mode field diameter, impact loss, dispersion, modal plurality, and non-linearity properties of the hollow core optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figure 13 comprises a ring of six capillaries, in other embodiments, one or more rings comprising any number of anti-resonance elements (for example 4, 5, 6, 7, 8, 9, 10, 11 or 12 capillaries) may be provided in the cladding portion.

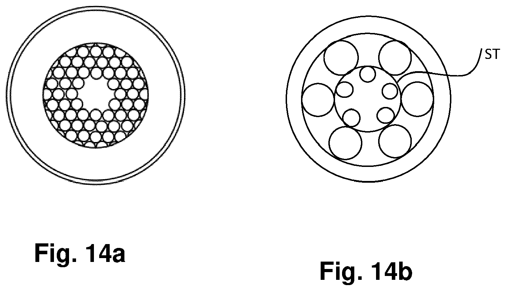

Figure 14a shows a Kagome fiber, comprising a Kagome lattice structure. Figure 14(b) shows a modified embodiment of the above discussed HC-PCFs with a single ring of tubular capillaries. In the example of Figure 14(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 13 and Figures 14a and 14b may have a circular cross-sectional shape. Other shapes are also possible for the tubular capillaries, like elliptical or polygonal cross-sections. Additionally, the solid material of the tubular capillaries of the examples of Figure 13 and Figures 14a and 14b may comprise plastic material, like PMA, glass, like silica, or soft glass.

Further embodiments are disclosed in the subsequent numbered list of clauses:

1. A radiation source assembly for generating broadband radiation, the radiation source assembly comprising:

a solid core photonic crystal fiber, SC-PCF, having an input end and an output end, wherein the input end is configured to receive pulses of radiation from a pump source;
a hollow core photonic crystal fiber, HC-PCF, that is filled with a gaseous working medium and arranged to receive pulses of radiation at an input end of the HC-PCF that are output from the output end of the SC-PCF; and
wherein the SC-PCF is configured to broaden a spectrum of the pulses of radiation by providing nonlinearity at normal group-velocity dispersion, and
the HC-PCF is configured to generate broadband radiation by nonlinear interaction of the pulses of radiation with the gaseous working medium, and output the broadband radiation at an output end of the HC-PCF.

2. The radiation source assembly of clause 1, wherein the output end of the SC-PCF is coupled to the input end of the HC-PCF.

3. The radiation source assembly of clause 2, further comprising a gas cell enclosing at least a portion of the HC-PCF, wherein the gas cell is filled with a gaseous working medium.

4. The radiation source assembly of clause 3, wherein the input end of the SC-PCF and the output end of the SC-PCF are enclosed within the gas cell, and the gas cell fully encloses the HC-PCF.

5. The radiation source assembly of clause 3, wherein the output end of the SC-PCF is enclosed within the gas cell, and the SC-PCF extends such that the input end of the SC-PCF is external to the gas cell, and the gas cell fully encloses the HC-PCF.

6. The radiation source assembly of clause 3, wherein the output end of the HC-PCF is enclosed within the gas cell; and the input end of the HC-PCF, and the SC-PCF, are external to the gas cell.

7. The radiation source assembly of clause 1, further comprising a further hollow core photonic crystal fiber, FHC-PCF, wherein the output end of the SC-PCF is coupled to an input end of the FHC-PCF, and the input end of the HC-PCF is coupled to an output end of the FHC-PCF.

8. The radiation source assembly of clause 7, further comprising:

a gas cell enclosing at least a portion of the HC-PCF, wherein the gas cell is filled with the gaseous working medium; and
a further gas cell, wherein the further gas cell encloses at least one end of the FHC-PCF.

9. The radiation source assembly of clause 8, wherein the further gas cell is filled with a further gaseous working medium.

10. The radiation source assembly of clause 8, wherein the further gas cell comprises a vacuum.

11. The radiation source assembly of any of clauses 8 to 10, wherein the output end of the SC-PCF is enclosed within the further gas cell.

12. The radiation source assembly of any of clauses 8 to 11, wherein the SC-PCF extends such that the input end of the SC-PCF is external to the gas cell.

13. The radiation source assembly of any of clauses 7 to 12, further comprising a mating fiber to couple the input end of the HC-PCF to the output end of the FHC-PCF.

14. The radiation source assembly of any of clauses 7 to 12, wherein the input end of the HC-PCF is coupled to an output end of the FHC-PCF by way of a collapsed portion of the HC-PCF and/or a collapsed portion of the FHC-PCF.

15. The radiation source assembly of any preceding clause, further comprising the pump source.

16. The radiation source assembly of clause 15, wherein the pulses of radiation have a duration in a range of 100 - 250 fs.

17. The radiation source assembly of clause 15, wherein the pulses of radiation have a duration of at least 250 fs.

18. The radiation source assembly of clause 15, wherein the pulses of radiation have a duration of at least 1 ps, optionally at least 1.5 ps, optionally at least 2 ps, optionally at least 5 ps, optionally at least 10 ps.

19. The radiation source assembly of any preceding clause, wherein the gaseous working medium comprises a noble gas.

20. The radiation source assembly of any preceding clause, wherein the broadband radiation comprises supercontinuum radiation.

21. A lithographic apparatus comprising the radiation source assembly of any preceding clause.

22. A metrology apparatus comprising the radiation source assembly of any of clauses 1 to 20.

23. A metrology apparatus according to claim 22, wherein the radiation source is for providing illumination light.

24. A method for generating broadband radiation, the method comprising:

> providing pulses of radiation from a pump source to an input end of a solid core photonic crystal fiber, SC-PCF, having the input end and an output end, wherein the SC-PCF is configured to broaden a spectrum of the pulses of radiation by providing nonlinearity at normal group-velocity dispersion;
> generating broadband radiation by nonlinear interaction of the pulses of radiation with a gaseous working medium in a hollow core photonic crystal fiber, HC-PCF, that is arranged to receive pulses of radiation at an input end of the HC-PCF that are output from the output end of the SC-PCF; and
> outputting the broadband radiation at an output end of the HC-PCF.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

## Claims

1.  A radiation source assembly for generating broadband radiation, the radiation source assembly comprising:

> a solid core photonic crystal fiber, SC-PCF, having an input end and an output end, wherein the input end is configured to receive pulses of radiation from a pump source;
> a hollow core photonic crystal fiber, HC-PCF, that is filled with a gaseous working medium and arranged to receive pulses of radiation at an input end of the HC-PCF that are output from the output end of the SC-PCF; and
> wherein the SC-PCF is configured to broaden a spectrum of the pulses of radiation by providing nonlinearity at normal group-velocity dispersion, and
> the HC-PCF is configured to generate broadband radiation by nonlinear interaction of the pulses of radiation with the gaseous working medium, and output the broadband radiation at an output end of the HC-PCF.

2.  The radiation source assembly of claim 1, wherein the output end of the SC-PCF is coupled to the input end of the HC-PCF.

3. The radiation source assembly of claim 2, further comprising a gas cell enclosing at least a portion of the HC-PCF, wherein the gas cell is filled with a gaseous working medium.

4. The radiation source assembly of claim 3, wherein the input end of the SC-PCF and the output end of the SC-PCF are enclosed within the gas cell, and the gas cell fully encloses the HC-PCF.

5. The radiation source assembly of claim 3, wherein the output end of the SC-PCF is enclosed within the gas cell, and the SC-PCF extends such that the input end of the SC-PCF is external to the gas cell, and the gas cell fully encloses the HC-PCF.

6. The radiation source assembly of claim 3, wherein the output end of the HC-PCF is enclosed within the gas cell; and the input end of the HC-PCF, and the SC-PCF, are external to the gas cell.

7. The radiation source assembly of claim 1, further comprising a further hollow core photonic crystal fiber, FHC-PCF, wherein the output end of the SC-PCF is coupled to an input end of the FHC-PCF, and the input end of the HC-PCF is coupled to an output end of the FHC-PCF.

8. The radiation source assembly of claim 7, further comprising:

   a gas cell enclosing at least a portion of the HC-PCF, wherein the gas cell is filled with the gaseous working medium; and
   a further gas cell, wherein the further gas cell encloses at least one end of the FHC-PCF.

9. The radiation source assembly of claim 7 or 8, further comprising a mating fiber to couple the input end of the HC-PCF to the output end of the FHC-PCF.

10. The radiation source assembly of claim 7 or 8, wherein the input end of the HC-PCF is coupled to an output end of the FHC-PCF by way of a collapsed portion of the HC-PCF and/or a collapsed portion of the FHC-PCF.

11. The radiation source assembly of any preceding claim, further comprising the pump source.

12. The radiation source assembly of claim 11, wherein the pulses of radiation have a duration in a range of 100 - 250 fs.

13. The radiation source assembly of claim 11, wherein the pulses of radiation have a duration of at least 250 fs.

14. A metrology apparatus comprising the radiation source assembly of any of claims 1 to 13 for providing illumination light.

15. A method for generating broadband radiation, the method comprising:

   providing pulses of radiation from a pump source to an input end of a solid core photonic crystal fiber, SC-PCF, having the input end and an output end, wherein the SC-PCF is configured to broaden a spectrum of the pulses of radiation by providing nonlinearity at normal group-velocity dispersion;
   generating broadband radiation by nonlinear interaction of the pulses of radiation with a gaseous working medium in a hollow core photonic crystal fiber, HC-PCF, that is arranged to receive pulses of radiation at an input end of the HC-PCF that are output from the output end of the SC-PCF; and
   outputting the broadband radiation at an output end of the HC-PCF.

**Fig. 1**

**Fig. 2**

**Fig. 3**

**Fig. 4**

**Fig. 5**

**Fig. 6**

700

112

106

102

104

110

108

114

116

118

**Fig. 7a**

702

112

116    106    114

102

104

110

108

120

118

**Fig. 7b**

**Fig. 7c**

**Fig. 8**

Fig. 9

Fig. 10

Fig. 11a

**Fig. 11b**

**Fig. 12**

**Fig. 13**

**Fig. 14a**

**Fig. 14b**

Europäisches
Patentamt

European
Patent Office

Office européen
des brevets

# EUROPEAN SEARCH REPORT

**Application Number**

EP 23 21 4793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/114053 A1 (GATTASS RAFAEL R [US] ET AL) 13 April 2023 (2023-04-13) * paragraphs [0008] - [0010]; claims 1,4; figures 1-2 * | 1-15 | INV. G02F1/35 G02F1/365 |
| A | US 2022/247143 A1 (ABDOLVAND AMIR [NL]) 4 August 2022 (2022-08-04) * claims 1,4; figures 7-9 * | 1-15 | |
| A | ZHANG HAOYU ET AL: "All-Fiber High Power Supercontinuum Generation by Cascaded Photonic Crystal Fibers Ranging From 370 nm to 2400 nm", IEEE PHOTONICS JOURNAL, IEEE, USA, vol. 12, no. 2, 30 March 2020 (2020-03-30) , pages 1-8, XP011783329, DOI: 10.1109/JPHOT.2020.2983120 [retrieved on 2020-04-15] * the whole document * | 1-15 | |
| A | RONG JIFANG ET AL: "Accurately Shaping Supercontinuum Spectrum via Cascaded PCF", SENSORS, vol. 20, no. 9, 27 April 2020 (2020-04-27) , page 2478, XP093115714, CH ISSN: 1424-8220, DOI: 10.3390/s20092478 Retrieved from the Internet: URL:https://www.ncbi.nlm.nih.gov/pmc/artic les/PMC7249107/pdf/sensors-20-02478.pdf> * the whole document * | 1-15 | **TECHNICAL FIELDS SEARCHED (IPC)** G02F |
| A | US 9 160 137 B1 (ABDOLVAND AMIR [DE] ET AL) 13 October 2015 (2015-10-13) * column 4, line 11 - column 8, line 2 * | 1-15 | |

The present search report has been drawn up for all claims

| Place of search | Date of completion of the search | Examiner |
|---|---|---|
| The Hague | 30 April 2024 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4793

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2024

| Patent document cited in search report | Publication date | Patent family member(s) | Publication date |
|---|---|---|---|
| US 2023114053 A1 | 13-04-2023 | NONE | |
| US 2022247143 A1 | 04-08-2022 | CN 113994553 A | 28-01-2022 |
| | | EP 3758168 A1 | 30-12-2020 |
| | | EP 3991255 A1 | 04-05-2022 |
| | | EP 4235984 A1 | 30-08-2023 |
| | | IL 288520 A | 01-01-2022 |
| | | US 2022247143 A1 | 04-08-2022 |
| | | WO 2020259972 A1 | 30-12-2020 |
| US 9160137 B1 | 13-10-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1
- US 2009195768 A
- WO 2017032454 A1